# EUROPEAN PATENT APPLICATION

(11) **EP 2 905 713 A1**
(43) Date of publication of application: **12.08.2015**
(21) Application number: 12885963.4
(22) Date of filing: 02.10.2012
(51) Int. Cl.: G06F 21/30

(54) **INFORMATION PROCESSING DEVICE, FUNCTION EXPANSION UNIT, AND INFORMATION PROCESSING SYSTEM**

(71) Applicant: Fujitsu Limited, Kawasaki-shi, Kanagawa 211-8588 (JP)
(72) Inventor: ASAGI, Ryouta, Tokyo 106-6135 (JP); KOJIMA, Kouji, Kawasaki-shi Kanagawa 211-8588 (JP); SUZUKI, Takeshi, Kawasaki-shi Kanagawa 211-8588 (JP); ITO, Yuichi, Kawasaki-shi Kanagawa 211-8588 (JP); ANZAI, Naozumi, Kawasaki-shi Kanagawa 211-8588 (JP)
(74) Representative: Wilding, Frances Ward
(86) International application number: PCT/JP2012/075562
(87) International publication number: WO 2014/054122

(57) **Abstract**

The object is to ensure security when coupling an information device and a function extension unit. An information processing apparatus (10) includes a memory unit (11), a receiver unit (12), and a control unit (13). The memory unit (11) stores unit identification information indicating a function extension unit (20) that is permitted to transmit and receive data. When adjacent to the function extension unit (20), the receiver unit (12) receives unit identification information indicating the function extension unit (20) from the adjacent function extension unit (20) by wireless communication. When the received unit identification information is identical with the unit identification information stored in the memory unit (11), the control unit (13) permits data transmission and reception with the adjacent function extension unit (20) via the wired transmission channel (14, 23).

## Description

### Technical Field

The embodiments discussed herein relate to an information processing apparatus, a function extension unit, and an information processing system.

### Background Art

In recent years, some information processing apparatuses, such as a tablet personal computer (PC), are configured connectable to a function extension unit including devices such as a keyboard. A tablet PC is a personal computer to which an instruction of a user is input by detecting a position of a finger, a pen, or the like, which is in contact with or adjacent to its display screen. Also, to extend a function of an information processing apparatus, a function extension unit includes, for example, a peripheral device, such as a keyboard and an HDD, and a battery for making an operating time longer.

Also, in recent years, IC (Integrated Circuit) tags are widely used. An IC tag is an electronic device capable of wireless communication and including a memory device, a transmitter device, a receiver device, and an antenna. An IC tag stores information such as identification information. Also, an IC tag has a function to transmit and receive such stored information using radio wave, electromagnetic wave, or the like.

There is a proposal of a wireless communication device selecting method in which an omnidirectional wireless communication connection is established via a relay terminal using a wireless IC tag, so that remotely located devices are connected to each other by wireless communication without moving around.

Also, there is a proposal of control means that facilitates selection of a wireless communication terminal that is to be connected from among a large number of wireless communication terminals that are present within a radio wave reaching area. To this end, when receiving a specific wireless communication ID (Identifier), control means switches communication means from directional communication means to wireless communication means and performs wireless communication using the wireless communication ID.

### Citation List

### Patent Literature

PTL1: Japanese Laid-open Patent Publication No. 2004-200887
PTL2: Japanese Laid-open Patent Publication No. 2001-156723

### Summary of Invention

### Technical Problem

The function extension unit is connectable to a plurality of different tablet PCs of a same model. Hence, a third person having a tablet PC of the same model can easily utilize a peripheral device of the function extension unit, which may cause a security problem. For example, when a function extension unit includes a memory device, such as a hard disk drive (HDD), a third person can access information stored in the memory device of the function extension unit, by connecting the function extension unit to a tablet PC of the same model as the tablet PC connectable to the function extension unit.

It is an object in one aspect of the embodiments to provide an information processing apparatus, a function extension unit, and an information processing system, for preventing data from being transmitted and received between non-approved devices.

### Solution to Problem

According to one aspect, an information processing apparatus that is couplable to a function extension unit to transmit data to, and receive data from, the coupled function extension unit via a wired transmission channel is provided. The information processing apparatus includes a memory unit, a receiver unit, and a control unit. The memory unit stores unit identification information indicating the function extension unit that is permitted to transmit and receive data. When adjacent to the function extension unit, the receiver unit receives the unit identification information indicating the function extension unit from the adjacent function extension unit by wireless communication. When the received unit identification information is identical with the unit identification information stored in the memory unit, the control unit permits data transmission and reception with the adjacent function extension unit via the wired transmission channel.

According to another aspect, a function extension unit that is couplable to an information processing apparatus to transmit data to, and receive data from, the coupled information processing apparatus via a wired transmission channel is provided. The function extension unit includes a memory unit and a wireless transmitter unit. The memory unit stores unit identification information indicating the function extension unit. When adjacent to the information processing apparatus, the wireless transmitter unit transmits the unit identification information stored in the memory unit to the information processing apparatus by wireless communication.

According to yet another aspect, an information processing system including an information processing apparatus and a function extension unit is provided.

### Advantageous Effects of Invention

According to one embodiment, data is prevented from being transmitted and received between an information processing apparatus and a function extension unit that are not approved.

The aforementioned and other objects, features, and advantages of the embodiments will be understood from the following description with reference to accompanying drawings illustrating preferable embodiments as exemplary embodiments.

### Brief Description of Drawings

[FIG. 1] FIG. 1 illustrates an information processing system of a first embodiment.
[FIG. 2] FIG. 2 illustrates an information processing apparatus of a second embodiment.
[FIG. 3] FIG. 3 is a block diagram of exemplary hardware of a slate unit.
[FIG. 4] FIG. 4 is a block diagram of exemplary hardware of a dock unit.
[FIG. 5] FIG. 5 is a block diagram of exemplary functions of the slate unit and the dock unit.
[FIG. 6] FIG. 6 illustrates an example of an identification information table.
[FIG. 7] FIG. 7 illustrates first exemplary setting of the identification information table.
[FIG. 8] FIG. 8 illustrates second exemplary setting of the identification information table.
[FIG. 9] FIG. 9 illustrates an example of a device information table.
[FIG. 10] FIG. 10 illustrates a first exemplary configuration for controlling connection.
[FIG. 11] FIG. 11 illustrates a second exemplary configuration for controlling connection.
[FIG. 12] FIG. 12 illustrates a third exemplary configuration for controlling connection.
[FIG. 13] FIG. 13 is a flowchart illustrating exemplary authentication of a slate unit.
[FIG. 14] FIG. 14 is a flowchart illustrating exemplary authentication of a slate unit (continuation).
[FIG. 15] FIG. 15 is a flowchart illustrating an exemplary variant of authentication of a slate unit in a first exemplary variant.
[FIG. 16] FIG. 16 is a block diagram of a second exemplary variant of hardware of a slate unit.
[FIG. 17] FIG. 17 is a block diagram of a second exemplary variant of hardware of a dock unit.
[FIG. 18] FIG. 18 is a block diagram of an exemplary variant of functional configurations of the slate unit and the dock unit in the second exemplary variant.
[FIG. 19] FIG. 19 is a sequence illustrating an exemplary variant of an authentication process in the second exemplary variant.

### Description of Embodiments

In the following, the embodiments will be described with reference to drawings.

### [First Embodiment]

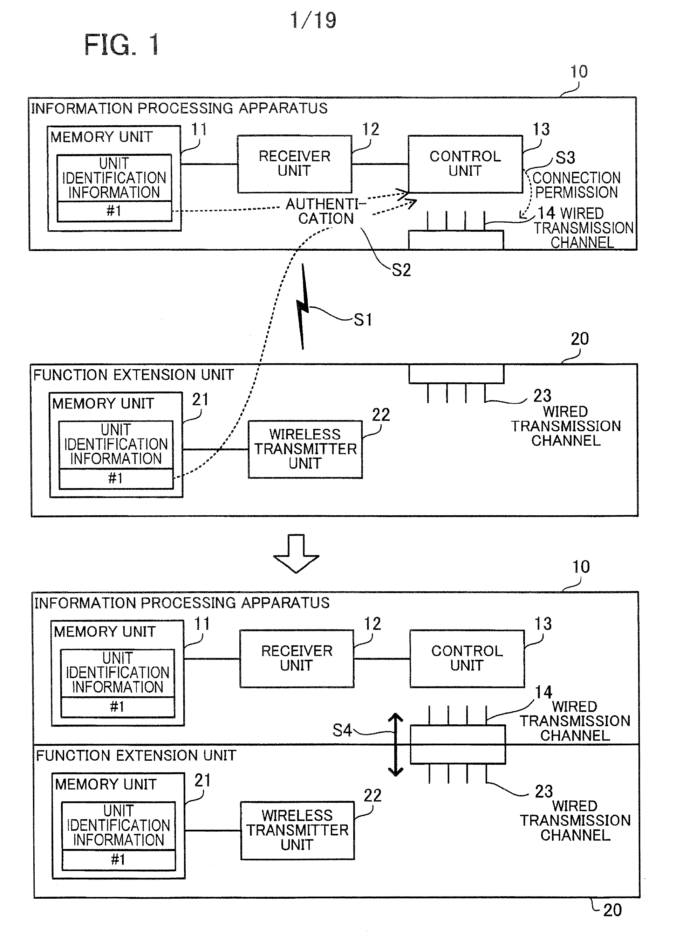

FIG. 1 illustrates an information processing system of the first embodiment. The information processing system of the first embodiment includes an information processing apparatus 10 and a function extension unit 20.

The information processing apparatus 10 is, for example, a portable computer, such as a tablet PC. The information processing apparatus 10 is couplable to the function extension unit 20. That is, as illustrated in the upper side of FIG. 1, a user can use the information processing apparatus 10 independently in a separate state from the function extension unit 20. Also, as illustrated in the lower side of FIG. 1, a user can use the information processing apparatus 10 in a coupling state with the function extension unit 20.

The information processing apparatus 10 includes a wired transmission channel 14. The wired transmission channel 14 is, for example, configured by an internal bus. On the other hand, the function extension unit 20 includes a wired transmission channel 23. As illustrated in the lower side of FIG. 1, when the information processing apparatus 10 and the function extension unit 20 are coupled to each other, the wired transmission channel 14 and the wired transmission channel 23 are connected to each other. Thereby, the information processing apparatus 10 transmits data to, and receives data from, the function extension unit 20 via the wired transmission channels 14 and 23.

In a state where the information processing apparatus 10 and the function extension unit 20 are coupled to each other with the wired transmission channels 14 and 23 that are connected to each other, the function of the information processing apparatus 10 is extended by the function of the function extension unit 20. For example, the function extension unit 20 includes one or a plurality of processing devices each having a corresponding extended function. Such processing devices are, for example, various types of devices, such as an HDD and a communication interface. When coupled to the function extension unit 20, the information processing apparatus 10 controls each processing device of the function extension unit 20 via the wired transmission channels 14 and 23.

Also, the information processing apparatus 10 has a function for permitting and prohibiting data transmission and reception with the function extension unit 20. This function is realized, for example, by a switch that physically disconnects the wired transmission channel 14. Alternatively, the information processing apparatus 10 may use processing of software to control permission and prohibition of data transmission and reception with the function extension unit 20 via the wired transmission channel 14.

The information processing apparatus 10 includes a memory unit 11, a receiver unit 12, and a control unit 13.

The memory unit 11 stores unit identification information indicating a function extension unit that is permitted to transmit and receive data. Also, the memory unit 11 may store unit identification information indicating a plurality of function extension units. Also, unit identification information may be stored in advance in the memory unit 11. Alternatively, unit identification information may be stored by operation of an administrator. Note that the memory unit 11 is, for example, configured by a non-volatile memory device, such as a ROM (Read Only Memory), an HDD, and a flash memory.

When adjacent to the function extension unit 20, the receiver unit 12 receives unit identification information from the adjacent function extension unit 20 by wireless communication. The receiver unit 12 is, for example, configured by an IC tag reader. Note that "when adjacent to the function extension unit 20" means, for example, a state of the information processing apparatus 10 and the function extension unit 20 which are close to each other such that a distance therebetween is within the range for wireless communication.

The control unit 13 authenticates the adjacent function extension unit 20 on the basis of the unit identification information received by the receiver unit 12. Specifically, the control unit 13 determines whether or not the received unit identification information is identical with the unit identification information stored in the memory unit 11 and, when the both unit identification information are identical, determines success of authentication. When authentication of the function extension unit 20 succeeds, the control unit 13 permits data transmission and reception with the function extension unit 20 via the wired transmission channel 14. Thereby, the information processing apparatus 10 transmits data to, and receives data from, the function extension unit 20, so that a user can use the information processing apparatus 10 with the extended function of the function extension unit 20.

Note that the control unit 13 is, for example, configured by a processor, such as a CPU (Central Processing Unit) and a DSP (Digital Signal Processor), or other electronic circuits, such as an ASIC (Application Specific Integrated Circuit) and an FPGA (Field Programmable Gate Array). The processor executes a program stored in a memory, for example. The processor may include a dedicated circuit for processing data, in addition to a computing unit and a register for executing instructions of programs.

The function extension unit 20 includes a memory unit 21 and a wireless transmitter unit 22.

The memory unit 21 stores unit identification information indicating the function extension unit 20 that is equipped with the memory unit 21. The unit identification information is, for example, stored in advance in the memory unit 21. The memory unit 21 is, for example, configured by a memory device in an IC tag.

When adjacent to the information processing apparatus 10, the wireless transmitter unit 22 transmits the unit identification information stored in the memory unit 21 to the information processing apparatus 10 by wireless communication. The unit identification information is transmitted, for example, using a transmitter device in an IC tag.

Here, operation of the information processing apparatus 10 for permitting data transmission and reception with the function extension unit 20 will be described. The memory unit 21 stores unit identification information #1, and the memory unit 11 stores unit identification information #1. Also, the information processing apparatus 10 is not initially coupled to the function extension unit 20.

First, as illustrated in the upper side of FIG. 1, when the information processing apparatus 10 and the function extension unit 20 are adjacent to each other, the receiver unit 12 receives the unit identification information #1 transmitted by the wireless transmitter unit 22 (step S1). The control unit 13 determines whether the received unit identification information #1 is stored in the memory unit 11 (step S2). Since the unit identification information #1 is stored in the memory unit 11, the control unit 13 permits data transmission and reception with the function extension unit 20 via the wired transmission channel 14 (step S3).

Thereafter, as illustrated in the lower side of FIG. 1, when the information processing apparatus 10 and the function extension unit 20 are coupled to each other, the wired transmission channels 14 and 23 are connected to each other. Since data transmission and reception is permitted via the wired transmission channel 14, the information processing apparatus 10 can transmit data to, and receive data from, the function extension unit 20 via the wired transmission channels 14 and 23 (step S4). Thereby, the function of the information processing apparatus 10 is extended by the function of the function extension unit 20.

On the other hand, although not depicted, when the received unit identification information is not stored in the memory unit 11 during the determination of above step S2, the control unit 13 determines that the adjacent function extension unit 20 is not permitted to transmit and receive data and prohibits data transmission and reception with the function extension unit 20 via the wired transmission channel 14. In this case, when the adjacent function extension unit 20 is coupled to the information processing apparatus 10, the information processing apparatus 10 is unable to transmit data to, and receive data from, the coupled function extension unit 20 via the wired transmission channels 14 and 23.

According to the first embodiment, the information processing apparatus 10 receives unit identification information transmitted from the function extension unit 20 by wireless communication and authenticates the function extension unit 20 on the basis of the received unit identification information. Then, only when succeeding in authentication, the information processing apparatus 10 permits data transmission and reception with the function extension unit 20 via the wired transmission channel, so as to operate in an extended function state. This limits information processing apparatus 10 that can transmit data to, and receive data from, the function extension unit 20 via the wired transmission channels 14 and 23, so that data transmission and reception is disabled between the information processing apparatus 10 and the function extension unit 20 that are not approved. This enhances security of the function extension unit 20.

For example, when the function extension unit 20 has a memory device as an extended function, the information processing apparatus 10 is unable to read out data from the memory device of the function extension unit 20 if the function extension unit 20 is not indicated by the unit identification information stored in the memory unit 11 of the information processing apparatus 10. This enhances security of information stored in the memory device of the function extension unit 20.

Also, the information processing apparatus 10 transmits and receives unit identification information by wireless communication in order to execute an authentication process based on the received unit identification information, before coupled to the function extension unit 20. This improves convenience, since the information processing apparatus 10 transmits data to, and receives data from, the function extension unit 20 without waiting an authentication process after coupled to the function extension unit 20.

### [Second Embodiment]

Next, in the second embodiment, a notebook computer of a separable type (hereinafter, a notebook PC of a separable type) will be described. A notebook PC of a separable type is a notebook computer having a separable component.

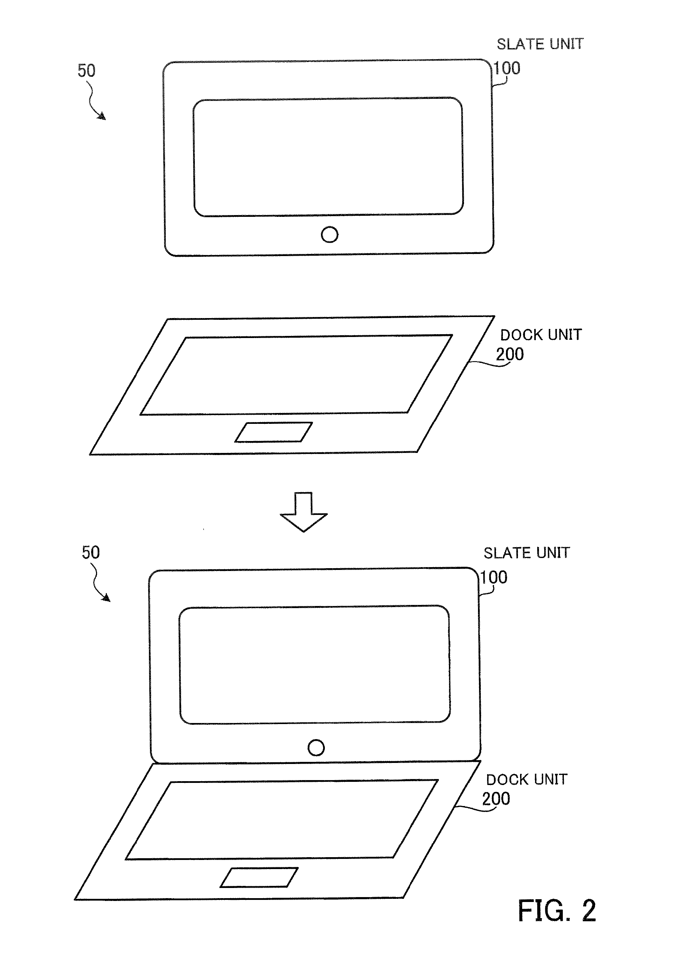

FIG. 2 illustrates an information processing apparatus of the second embodiment. The information processing apparatus 50 illustrated in FIG. 2 is a notebook PC of a separable type. The information processing apparatus 50 includes a slate unit 100 and a dock unit 200.

When the information processing apparatus 50 is in a state where the slate unit 100 is separated from the dock unit 200 as illustrated in the upper side of FIG. 2, a user can use the slate unit 100 as a portable terminal, such as a tablet PC. Also, when the slate unit 100 and the dock unit 200 are coupled and connected via a wire as illustrated in the lower side of FIG. 2, a user can use them as a notebook computer including the slate unit 100 as a display unit and the dock unit 200 as an input unit.

Note that, in the following, "coupling" of a slate unit and a dock unit merely means physically linking a slate unit and a dock unit. On the other hand, "connecting via a wire" of a slate unit and a dock unit means bringing a slate unit and a dock unit (or each device of a dock unit) into a state capable of transmitting and receiving data therebetween via a wired transmission channel (a bus described later).

The dock unit 200 includes a device, such as a keyboard and an HDD, which extends the function of the slate unit 100. As illustrated in the lower side of FIG. 2, the dock unit 200 is connected to the slate unit 100 via a wire so as to enable the slate unit 100 to use functions of devices in the dock unit 200. Also, the dock unit 200 includes an IC tag. When adjacent to the slate unit 100, the dock unit 200 transmits its identification information, which is used in authentication of the slate unit 100, using an IC tag.

The slate unit 100 is a component of a main body of a notebook PC of a separable type. The slate unit 100 is connected to the dock unit 200 via a wire to control devices in the dock unit 200. Also, the slate unit 100 includes a function for permitting and prohibiting a wired connection with the dock unit 200.

Also, the slate unit 100 includes an IC tag reader. When adjacent to the dock unit 200, the slate unit 100 first receives identification information transmitted from the IC tag of the dock unit 200, using an IC tag reader. "Adjacent" means that an IC tag reader and an IC tag are close to each other in communication range. The slate unit 100 authenticates the dock unit 200 on the basis of the received identification information. When succeeding in authentication, the slate unit 100 operates to permit a wired connection with the dock unit 200.

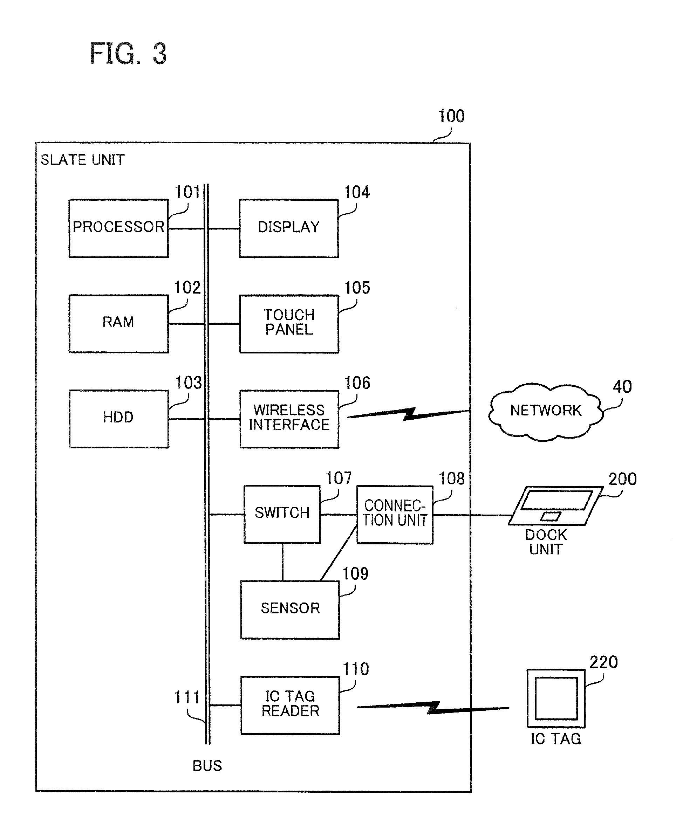

FIG. 3 is a block diagram of exemplary hardware of the slate unit. The slate unit 100 includes a processor 101, a RAM (Random Access Memory) 102, an HDD 103, a display 104, a touch panel 105, a wireless interface 106, a switch 107, a connection unit 108, a sensor 109, and an IC tag reader 110. The above devices except the connection unit 108 and the sensor 109 are connected to a bus 111 in the slate unit 100. The switch 107, the connection unit 108, and the sensor 109 are connected to each other.

The processor 101 is a device including a computing unit that executes instructions of programs. The processor 101 loads at least a part of programs and data stored in the HDD 103 into the RAM 102 to execute the programs. Note that the processor 101 may be a CPU, a DSP, or the like. Also, the processor 101 may include a plurality of processor cores, and the slate unit 100 may include a plurality of processors. Parallel processing may be executed using a plurality of processors or processor cores. Also, an aggregation of two or more processors, a dedicated circuit such as an FPGA and an ASIC, an aggregation of two or more dedicated circuits, a combination of a processor and a dedicated circuit, and the like may be called "processor".

The RAM 102 is a volatile memory that temporarily stores programs executed by the processor 101 and data referred to by programs. Note that the slate unit 100 may include a memory of a type other than RAM. Also, the slate unit 100 may include a plurality of volatile memories.

The HDD 103 is a non-volatile memory device that stores programs and data of software, such as an operating system (OS), firmware, and application software. Note that the slate unit 100 may include a memory device of another type, such as a flash memory and an SSD (Solid State Drive). Also, the slate unit 100 may include a plurality of non-volatile memory devices.

The display 104 displays an image in accordance with an instruction from the processor 101. The display 104 is, for example, a liquid crystal display (LCD) or an organic EL (Electro Luminescence) display.

The touch panel 105 is superposed on the display 104 to detect touch operation of a user on the display 104 and send an input signal indicating a touch position to the processor 101. The touch operation is performed using a pointing device, such as a touch pen or a finger of a user. A touch position detection method may be any of various methods, such as a matrix switch method, a resistance film method, a surface acoustic wave method, an infrared light method, an electromagnetic induction method, and an electrostatic capacitance method.

The wireless interface 106 is a communication interface that performs wireless communication. The wireless interface 106 demodulates and decodes a reception signal and encodes and modulates a transmission signal. The wireless interface 106 may access a wide area network, such as a mobile telephone network, and a local network, such as a wireless LAN (Local Area Network). Also, the wireless interface 106 may perform short distance wireless communication in accordance with a standard, such as Bluetooth (recorded trademark). For example, the wireless interface 106 is connected to a network 40 via an access point. The slate unit 100 may include a plurality of wireless interfaces.

The switch 107 is a component that connects and disconnects the bus 111 and the connection unit 108. The switch 107 connects and disconnects the bus 111 and the connection unit 108 in accordance with an instruction from the processor 101. Specifically, when the switch 107 receives a signal indicating that the slate unit 100 and the dock unit 200 are coupled to each other and a signal permitting use of each device in the dock unit 200 from the processor 101, the switch 107 enables data transmission and reception with the dock unit 200 via the connection unit 108. Also, when a signal permitting use of each device in the dock unit 200 is not input from the processor 101 (i.e., when the use of each device in the dock unit 200 is prohibited), the switch 107 disables data transmission and reception with the dock unit 200 via the connection unit 108.

The connection unit 108 is an interface for connecting to the dock unit 200 via a wire. The connection unit 108 is connected to the dock unit 200 via a wire, so that the bus 111 and the bus of the dock unit 200 are connected via the connection units of the connection unit 108 and the dock unit 200. Thereby, the processor 101 can receive data from, and output data to, each device in the dock unit 200.

The sensor 109 detects a coupling state of the slate unit 100 to the dock unit 200. Also, the sensor 109 outputs a signal indicating a coupling state to the switch 107.

When an IC tag 220 is adjacent in communication range, the IC tag reader 110 receives a signal transmitted from the IC tag 220 and sends the received signal to the processor 101. As described later, the IC tag 220 is provided in the dock unit 200.

Note that programs executed by the processor 101 may be copied from another memory device to the HDD 103. Also, programs executed by the processor 101 may be downloaded by the wireless interface 106 from the network 40.

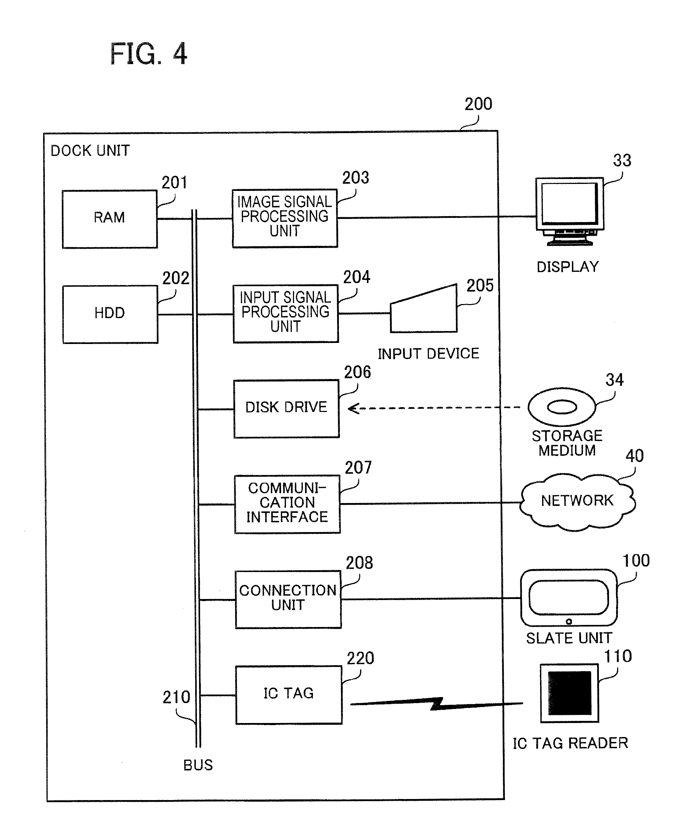

FIG. 4 is a block diagram of exemplary hardware of the dock unit.

The dock unit 200 includes a RAM 201, an HDD 202, an image signal processing unit 203, an input signal processing unit 204, an input device 205, a disk drive 206, a communication interface 207, a connection unit 208, and an IC tag 220. Each device except the input device 205 is connected to a bus 210 in the dock unit 200. Also, the input device 205 is connected to the input signal processing unit 204.

In the dock unit 200, the RAM 201, the HDD 202, the image signal processing unit 203, the input signal processing unit 204, the input device 205, the disk drive 206, the communication interface 207, and the connection unit 208 are provided to extend the function of the slate unit 100.

The RAM 201 is a volatile memory that temporarily stores programs executed by the processor 101 of the slate unit 100 and data used in calculation. The RAM 201 is, for example, used to extend the capacity of the RAM 102 of the slate unit 100 as a main memory. Note that the dock unit 200 may include a memory of a type other than RAM. Also, the dock unit 200 may include a plurality of volatile memories.

The HDD 202 is a non-volatile memory device that stores programs and data of an operating system, firmware, and software such as application software. Note that the dock unit 200 may include a memory device of another type, such as a flash memory and an SSD. Also, the dock unit 200 may include a plurality of non-volatile memory devices.

The image signal processing unit 203 outputs an image to the display 33 connected to the dock unit 200 in accordance with an instruction transmitted from the processor 101 of the slate unit 100 via the connection unit 208. The display 33 is, for example, a CRT (Cathode Ray Tube) display and a liquid crystal display.

The input device 205 is a device that sends an input signal to the input signal processing unit 204 in response to operation of a user. The input device 205 is, for example, a keyboard and a touch pad.

The input signal processing unit 204 acquires an input signal from the input device 205 in the dock unit 200 and sends the acquired input signal to the processor 101 via the connection unit 208. Also, the input signal processing unit 204 may be connected to an external pointing device, such as a mouse, as well as an external input device, such as a keypad, in addition to the input device 205.

The disk drive 206 is a drive device that reads programs and data stored in the storage medium 34. The storage medium 34 is, for example, a magnetic disk, such as a flexible disk (FD) and an HDD, an optical disc, such as a compact disc (CD) and a digital versatile disc (DVD), and a magneto-optical disk (MO). The disk drive 206 stores programs and data read from the storage medium 34 in the RAM 201 and the HDD 202 in accordance with an instruction transmitted from the processor 101 via the connection unit 208.

The communication interface 207 is an interface that communicates with other computers via the network 40. The communication interface 207 may be a wired interface connected to a wired network or a wireless interface connected to a wireless network.

The connection unit 208 is an interface for connecting to the slate unit 100 via a wire. The connection unit 208 is connected to the slate unit 100, so that the bus 210 and the bus 111 are connected to each other via the connection unit 208 and the connection unit 108. Thereby, each device in the dock unit 200 can receive data from, and output data to, the processor 101.

The IC tag 220 is an electronic device that includes a memory device, a transmitter device, a receiver device, an antenna, and other devices. When adjacent to the IC tag reader 110, the IC tag 220 operates using a radio signal transmitted from the IC tag reader 110 as power supply and wirelessly transmits a signal of information in a memory device inside the IC tag 220 to the IC tag reader 110. A transmission method may be any of an electromagnetic coupling method, an electromagnetic induction method, a microwave method, and an optical communication method.

Note that the IC tag 220 may be unconnected to the bus 210. However, when the IC tag 220 is connected to the bus 210, the processor 101 of the slate unit 100 coupled to the dock unit 200 can read information of the IC tag 220 via the bus 210, for example.

Note that the dock unit 200 may include any one or more devices of the RAM 201, the HDD 202, the image signal processing unit 203, the input device 205, the disk drive 206, and the communication interface 207. It is unnecessary for the dock unit 200 to include all the devices.

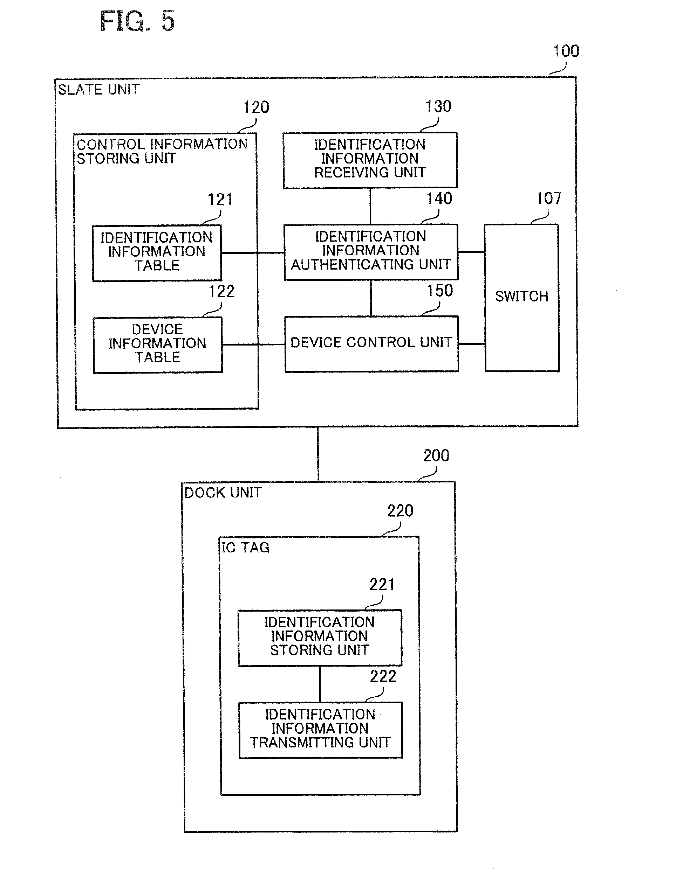

FIG. 5 is a block diagram of exemplary functions of the slate unit and the dock unit. The slate unit 100 includes a switch 107, a control information storing unit 120, an identification information receiving unit 130, an identification information authenticating unit 140, and a device control unit 150. The switch 107 is same as that in FIG. 3, and thus its description will be omitted.

The control information storing unit 120 stores information that the slate unit 100 uses to control the devices in the dock unit 200. The control information storing unit 120 includes an identification information table 121 and a device information table 122.

The identification information table 121 stores dock identification information indicating a dock unit that is permitted to connect via a wire. Also, dock identification information may be stored in the identification information table 121 in advance. Alternatively, dock identification information may be stored in the identification information table 121 in response to operation of a user. The device information table 122 stores information indicating correspondence between dock identification information and device configuration, which is obtained from a dock unit when connected via a wire last time.

When the slate unit 100 is adjacent to the dock unit 200, the identification information receiving unit 130 receives dock identification information of the dock unit 200 from the IC tag 220.

The identification information authenticating unit 140 determines whether the dock identification information received by the identification information receiving unit 130 is stored in the identification information table 121, in order to authenticate the dock unit 200. When the dock identification information is stored in the identification information table 121, authentication successes, and the identification information authenticating unit 140 controls the switch 107 to connect to the dock unit 200 via a wire. Note that, when the slate unit 100 is permitted to connect to the dock unit 200 via a wire by the identification information authenticating unit 140 and gets coupled to the dock unit 200, the slate unit 100 is connected to the dock unit 200 via a wire.

When the slate unit 100 is connected to the dock unit 200 via a wire, the device control unit 150 searches the device information table 122 for a device configuration corresponding to the received dock identification information. The device control unit 150 executes a control for enabling the slate unit 100 to use the devices in the dock unit 200 on the basis of the searched device configuration. For example, the device control unit 150 enables the slate unit 100 to use the devices, by loading device drivers for controlling the devices in the dock unit 200.

Then, when connected to the dock unit 200 via a wire, the device control unit 150 detects a device configuration of the dock unit 200 and compares it with the searched device configuration. When the device configurations are not identical with each other, the device control unit 150 outputs notification information for inquiring a user whether to use the dock unit 200. Then, when a user does not approve, the device control unit 150 controls the switch 107 to prohibit a wired connection with the dock unit 200.

Note that, when the device configurations are not identical with each other, the device control unit 150 may prohibit a wired connection only with the device of non-identical device configuration, without outputting notification information to a user.

The dock unit 200 includes an IC tag 220. The IC tag 220 is same as that in FIG. 4, and thus its description will be omitted. The IC tag 220 includes an identification information storing unit 221 and an identification information transmitting unit 222. The identification information storing unit 221 stores dock identification information for identifying the dock unit 200. When the dock unit 200 is adjacent to the slate unit 100, the identification information transmitting unit 222 transmits the dock identification information stored in the identification information storing unit 221 to the slate unit 100 in response to a request of the IC tag reader 110.

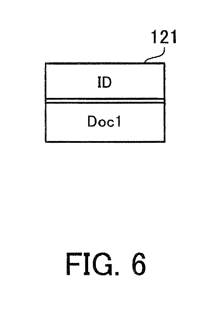

FIG. 6 illustrates an example of the identification information table. The identification information table 121 includes a field of ID. In the field of ID, dock identification information of a dock unit that is permitted to connect via a wire is set. In the following, exemplary setting of the identification information table 121 will be described.

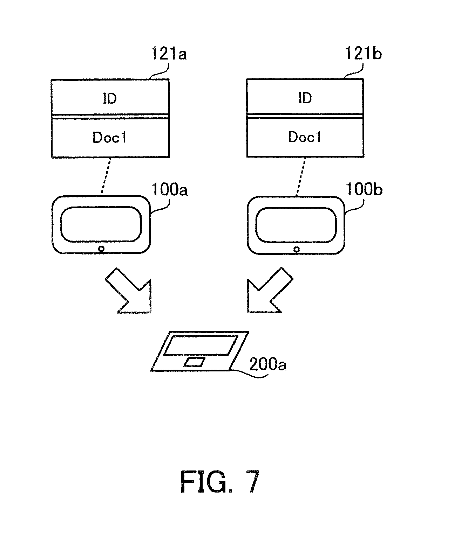

FIG. 7 illustrates first exemplary setting of the identification information table. FIG. 7 illustrates a case where slate units 100a and 100b and a dock unit 200a are present. The slate unit 100a includes an identification information table 121 a, and the slate unit 100b includes an identification information table 121b. The identification information tables 121a and 121b each store "Doc1 as an ID. Dock identification information of the dock unit 200a is "Doc1 ". In this case, the slate units 100a and 100b are each connectable to the dock unit 200a via a wire.

As in the example of FIG. 7, dock identification information of a same dock unit may be stored in identification information tables of a plurality of slate units. In this case, a plurality of slate units are connected to one dock unit via a wire. Thereby, for example, a plurality of users who use respective different slate units can share one dock unit.

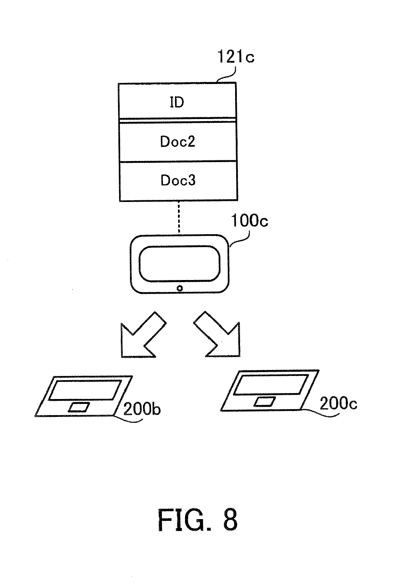

FIG. 8 illustrates second exemplary setting of the identification information table. FIG. 8 illustrates a case where a slate unit 100c and dock units 200b and 200c are present. The slate unit 100c includes an identification information table 121c. The identification information table 121c stores "Doc2" and "Doc3" as IDs. Dock identification information of the dock unit 200b is "Doc2", and dock identification information of the dock unit 200c is "Doc3". In this case, the dock units 200b and 200c are each connectable to the slate unit 100c via a wire.

As in the example of FIG. 8, dock identification information indicating a plurality of dock units may be stored in the identification information table 121c of one slate unit. In this case, one slate unit is connectable to a plurality of dock units via a wire. Thereby, for example, a user who uses one slate unit can use a plurality of dock units.

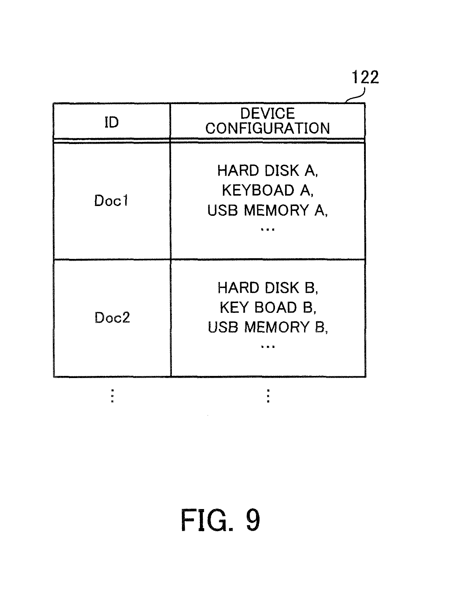

FIG. 9 illustrates an example of a device information table. The device information table 122 includes fields of ID and device configuration. The field of ID contains dock identification information of dock units that are to be authenticated. The field of the device configuration contains information about the dock units corresponding to IDs, which indicates the device configurations of the last wired-connection time in the dock units.

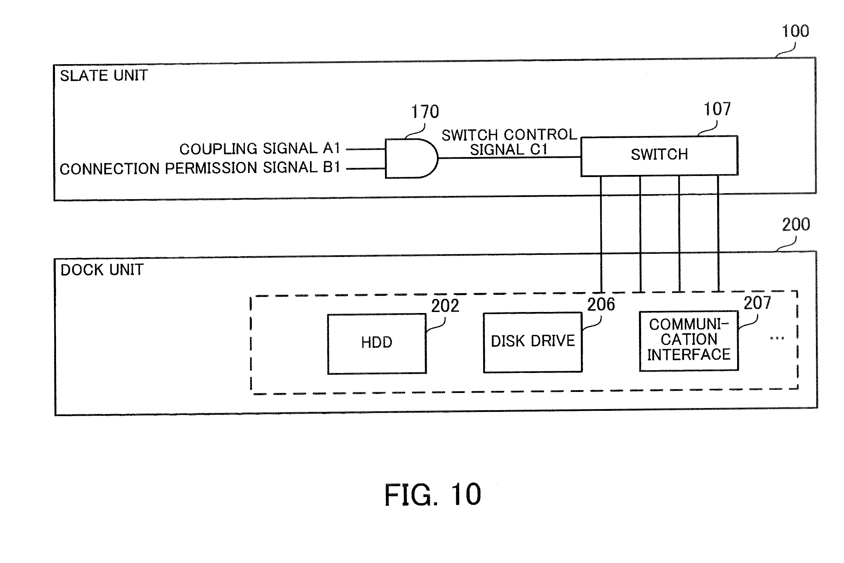

Next, with reference to FIGS. 10 to 12, an exemplary configuration for permitting and prohibiting a wired connection between the slate unit 100 and the dock unit 200 will be described.

FIG. 10 illustrates a first exemplary configuration for controlling connection. In FIG. 10, the switch 107 is connected to an AND gate 170 and each device (the HDD 202, the disk drive 206, and the communication interface 207, etc.) of the dock unit 200. A coupling signal A1 and a connection permission signal B1 are input into the AND gate 170.

The coupling signal A1 is output from the sensor 109, which detects a coupling state of the slate unit 100 and the dock unit 200. The sensor 109 sets the coupling signal A1 in an OFF state when the dock unit 200 is not coupled, and sets the coupling signal A1 in an ON state when the dock unit 200 is coupled. The sensor 109 is, for example, equipped in the connection unit 108 of the slate unit 100 to mechanically or optically detect whether a connector of the connection unit 208 of the dock unit 200 is inserted.

The connection permission signal B1 is a signal indicating whether or not to permit a wired connection between the slate unit 100 and the dock unit 200. The connection permission signal B1 is set in an ON state when a wired connection with the dock unit 200 is permitted by the identification information authenticating unit 140, and is set in an OFF state when a wired connection is prohibited.

The switch control signal C1 is output from the AND gate 170 to the switch 107. The switch control signal C1 is a signal for causing the switch 107 to connect and disconnect the bus 111 and the connection unit 108.

When the dock unit 200 is not coupled to the slate unit 100, the coupling signal A1 is set in an OFF state, and the switch 107 switches to a disconnecting state regardless of the value of the connection permission signal B1. In this state, only the devices in the slate unit 100 are connected to the bus 111 of the slate unit 100. On the other hand, when the dock unit 200 is coupled to the slate unit 100, the coupling signal A1 is set in an ON state. In this state, the state of the switch 107, i.e., whether the slate unit 100 and the dock unit 200 are connected or disconnected via a wire, is controlled on the basis of the connection permission signal B1 indicating whether to permit a wired connection.

When the connection permission signal B1 is in an ON state to permit a wired connection between the slate unit 100 and the dock unit 200, the switch 107 switches to a connecting state. In this state, the bus 111 of the slate unit 100 and the bus 210 of the dock unit 200 are connected to each other, and the processor 101 of the slate unit 100 transmits data to, and receives data from, the devices of the dock unit 200 connected to the bus 210.

On the other hand, when the connection permission signal B1 is in an OFF state to prohibit a wired connection between the slate unit 100 and the dock unit 200, the switch 107 switches to a disconnecting state. In this state, the bus 111 of the slate unit 100 and the bus 210 of the dock unit 200 are disconnected from each other, and the processor 101 of the slate unit 100 transmits data to, and receives data from, only the devices in the slate unit 100 in the same way as the slate unit 100 to which the dock unit 200 is not coupled.

As described above, a wired connection between the slate unit 100 and each device in the dock unit 200 is controlled by the switch 107 which physically connects and disconnects the bus 111 and the bus 210. Specifically, when the slate unit 100 permits a wired connection with the dock unit 200, and the slate unit 100 is coupled to the dock unit 200, the switch 107 connects the slate unit 100 and the devices in the dock unit 200 via a wire. Thereby, the slate unit 100 can use the devices in the dock unit 200.

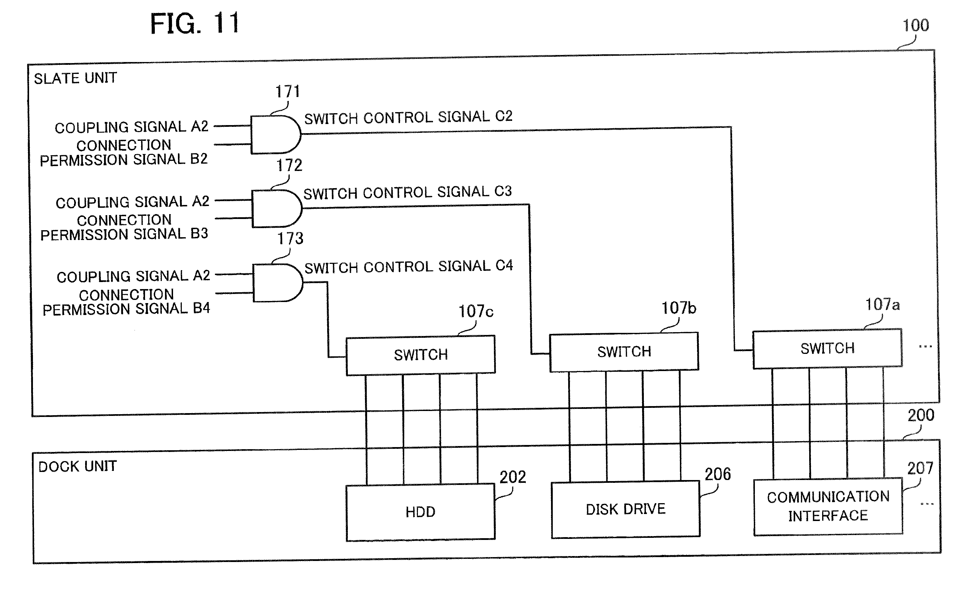

FIG. 11 illustrates a second exemplary configuration for controlling connection. In the second example illustrated in FIG. 11, the switches 107a, 107b, and 107c are used instead of the switch 107 of FIG. 10. In FIG. 11, an AND gate 171 and a communication interface 207 are connected to the switch 107a. An AND gate 172 and a disk drive 206 are connected to the switch 107b. Also, an AND gate 173 and an HDD 202 are connected to the switch 107c.

The coupling signal A2 and the connection permission signal B2 are input into the AND gate 171. The coupling signal A2 and the connection permission signal B3 are input into the AND gate 172. Also, the coupling signal A2 and the connection permission signal B4 are input into the AND gate 173. The coupling signal A2 is the same signal as the coupling signal A1 in FIG. 10.

Also, the connection permission signal B2 is a signal indicating whether or not to permit a wired connection between the slate unit 100 and the communication interface 207. The connection permission signal B2 is set in an ON state when a wired connection with the communication interface 207 is permitted by the identification information authenticating unit 140, and is set in an OFF state when the wired connection is prohibited. The connection permission signal B3 is a signal indicating whether or not to permit a wired connection between the slate unit 100 and the disk drive 206. The connection permission signal B3 is set in an ON state when a wired connection with the disk drive 206 is permitted by the identification information authenticating unit 140, and is set in an OFF state when the wired connection is prohibited. The connection permission signal B4 is a signal indicating whether or not to permit a wired connection between the slate unit 100 and the HDD 202. The connection permission signal B4 is set in an ON state when a wired connection with the HDD 202 is permitted by the identification information authenticating unit 140, and is set in an OFF state when the wired connection is prohibited.

A switch control signal C2 is output from the AND gate 171 to the switch 107a. The switch control signal C2 is a signal that causes the switch 107a to connect and disconnect the communication interface 207 and the connection unit 108. A switch control signal C3 is output from the AND gate 172 to the switch 107b. The switch control signal C3 is a signal that causes the switch 107b to connect and disconnect the disk drive 206 and the connection unit 108. A switch control signal C4 is output from the AND gate 173 to the switch 107c. The switch control signal C4 is a signal that causes the switch 107c to connect and disconnect the HDD 202 and the connection unit 108.

When the dock unit 200 is not coupled to the slate unit 100, the coupling signal A2 is set in an OFF state, and the switch 107a switches to a disconnecting state regardless of the value of the connection permission signal B2, and the switch 107b switches to a disconnecting state regardless of the value of the connection permission signal B3, and the switch 107c switches to a disconnecting state regardless of the value of the connection permission signal B4. In this state, only the devices in the slate unit 100 are connected to the bus 111 of the slate unit 100. On the other hand, the coupling signal A2 is set in an ON state when the dock unit 200 is coupled to the slate unit 100. In this state, the states of the switches 107a, 107b, and 107c, i.e., whether the bus 111 of the slate unit 100 and each device of the dock unit 200 (which is the HDD 202, the disk drive 206, and the communication interface 207) are connected or disconnected via a wire, is controlled on the basis of the connection permission signals B2, B3, and B4 indicating whether to permit a connection, as described below.

When the connection permission signal B2 is in an ON state to permit a wired connection between the slate unit 100 and the communication interface 207, the switch 107a switches to a connecting state. In this state, the bus 111 of the slate unit 100 and the communication interface 207 of the dock unit 200 are connected to each other, and the processor 101 of the slate unit 100 transmits data to, and receives data from, the communication interface 207 connected to the bus 210.

On the other hand, when the connection permission signal B2 is in an OFF state to prohibit a wired connection between the slate unit 100 and the communication interface 207, the switch 107a switches to a disconnecting state. In this state, the bus 111 of the slate unit 100 and the bus 210 of the dock unit 200 are disconnected from each other, and the processor 101 of the slate unit 100 is unable to transmit data to, and receive data from, the communication interface 207.

As for the switch 107b as well, the operation of the switch 107b is controlled depending on whether or not a wired connection with the disk drive 206 is permitted, in other words, depending on whether the connection permission signal B3 is in an ON state or an OFF state. When the connection permission signal B3 is in an ON state, the bus 111 of the slate unit 100 and the disk drive 206 of the dock unit 200 are connected to each other. When the connection permission signal B3 is in an OFF state, the bus 111 and the disk drive 206 are disconnected from each other.

As for the switch 107c as well, the operation of the switch 107c is controlled depending on whether or not a wired connection with the HDD 202 is permitted, in other words, depending on whether the connection permission signal B4 is in an ON state or an OFF state. When the connection permission signal B4 is in an ON state, the bus 111 of the slate unit 100 and the HDD 202 of the dock unit 200 are connected to each other. When the connection permission signal B4 is in an OFF state, the bus 111 and the HDD 202 are disconnected from each other.

In the example of FIG. 11, the devices in the dock unit 200 are connected to the switches 107a, 107b, and 107c, respectively. Operations of the switches 107a, 107b, and 107c are controlled by independent connection permission signals, respectively. This configuration enables the slate unit 100 to permit and prohibit a wired connection with each device in the dock unit 200.

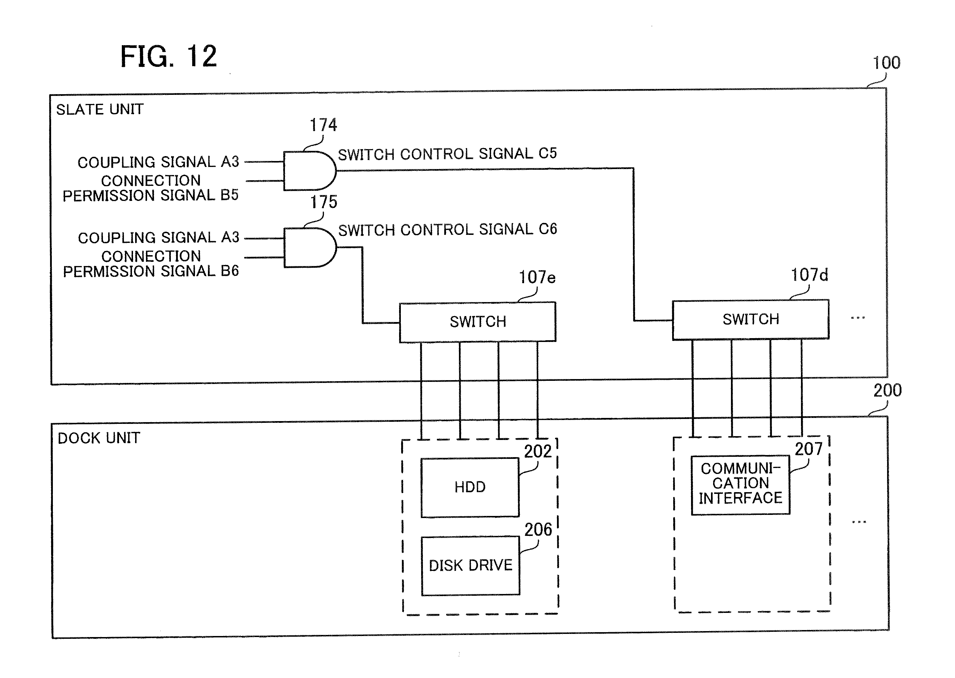

FIG. 12 illustrates a third exemplary configuration for controlling connection. In FIG. 12, switches 107d and 107e are used instead of the switch 107. In FIG. 12, the AND gate 174 and each device relevant to communication (such as the communication interface 207) are connected to the switch 107d. The AND gate 175 and each device relevant to storage medium (such as the HDD 202 and the disk drive 206) are connected to the switch 107e.

A coupling signal A3 and a connection permission signal B5 are input into the AND gate 174. A coupling signal A3 and a connection permission signal B6 are input into the AND gate 175. The coupling signal A3 is the same signal as the coupling signal A1 in FIG. 10. Also, the connection permission signal B5 is a signal indicating whether or not to permit a wired connection between the slate unit 100 and each device relevant to communication, such as the communication interface 207. The connection permission signal B5 is set in an ON state when a wired connection is permitted with each device relevant to communication by the identification information authenticating unit 140, and is set in an OFF state when the wired connection is prohibited. The connection permission signal B6 is a signal indicating whether or not to permit a wired connection between the slate unit 100 and each device relevant to a storage medium, such as the HDD 202 and the disk drive 206. The connection permission signal B6 is set in an ON state when a wired connection is permitted with each device relevant to a storage medium by the identification information authenticating unit 140, and is set in an OFF state when the wired connection is prohibited.

A switch control signal C5 is output from the AND gate 174 to the switch 107d. The switch control signal C5 is a signal that causes the switch 107d to connect and disconnect each device relevant to communication and the connection unit 108. A switch control signal C6 is output from the AND gate 175 to the switch 107e. The switch control signal C6 is a signal that causes the switch 107e to connect and disconnect each device relevant to a storage medium and the connection unit 108.

When the dock unit 200 is not coupled to the slate unit 100, the coupling signal A3 is set in an OFF state, and the switch 107d switches to a disconnecting state regardless of the value of the connection permission signal B5, and the switch 107e switches to a disconnecting state regardless of the value of the connection permission signal B6. In this state, only the devices in the slate unit 100 are usable on the bus 111 of the slate unit 100. On the other hand, when the dock unit 200 is coupled to the slate unit 100, the coupling signal A3 is set in an ON state. In this state, the states of the switches 107d and 107e, i.e., whether the bus 111 of the slate unit 100 and each device in the dock unit 200 (each device relevant to a storage medium and each device relevant to communication) are connected or disconnected via a wire, is controlled on the basis of the connection permission signals B5 and B6 indicating whether to permit a wired connection, as described below.

When the connection permission signal B5 is in an ON state to permit a wired connection between the slate unit 100 and each device relevant to communication, the switch 107d switches to a connecting state. In this state, the bus 111 of the slate unit 100 and each device relevant to communication of the dock unit 200 are connected to each other, so that the processor 101 of the slate unit 100 transmits data to, and receives data from, each device relevant to communication via the bus 210.

On the other hand, when the connection permission signal B5 is in an OFF state to prohibit a wired connection between the slate unit 100 and each device relevant to communication, the switch 107d switches to a disconnecting state. In this state, the bus 111 of the slate unit 100 and each device relevant to communication of the dock unit 200 are disconnected from each other, to prevent the processor 101 of the slate unit 100 from transmitting data to, and receiving data from, each device relevant to communication.

As for the switch 107e as well, the operation of the switch 107e is controlled depending on whether or not a wired connection is permitted with each device relevant to a storage medium, in other words, whether the connection permission signal B6 is in an ON state or an OFF state. When the connection permission signal B6 is in an ON state, the bus 111 of the slate unit 100 and each device relevant to a storage medium of the dock unit 200 are connected to each other. When the connection permission signal B6 is in an OFF state, the bus 111 and each device relevant to a storage medium are disconnected from each other.

In the example of FIG. 12, devices of individual types in the dock unit 200 are connected to the switches 107d and 107e, respectively. Operations of switches 107d and 107e are controlled by independent connection permission signals, respectively. This configuration enables the slate unit 100 to permit and prohibit a wired connection with devices of each type in the dock unit 200.

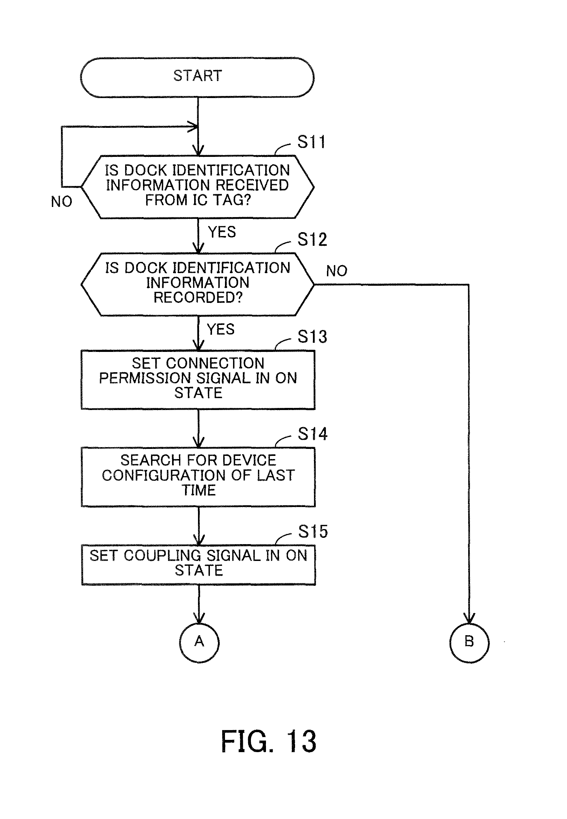

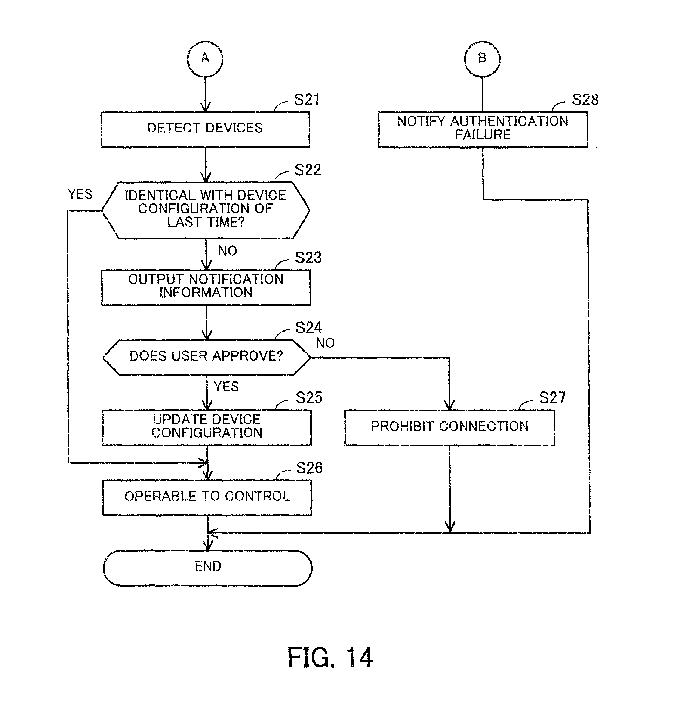

FIGS. 13 and 14 are a flowchart illustrating exemplary authentication of the slate unit. At the beginning of FIG. 13, the dock unit 200 is not coupled to the slate unit 100, and the IC tag 220 of the dock unit 200 is not present in the communication range of the IC tag reader 110 of the slate unit 100. Also, at the beginning, an OFF-state connection permission signal is input into the switch.

(Step S11) The identification information receiving unit 130 determines whether dock identification information is received from the IC tag 220 of the dock unit 200, at regular time intervals. If the dock unit 200 is adjacent, and dock identification information is received from the identification information transmitting unit 222 of the dock unit 200, the process proceeds to step S12. If dock identification information is not received from the dock unit 200, the process proceeds to step S 11.

(Step S12) The identification information authenticating unit 140 determines whether dock identification information received by the identification information receiving unit 130 is stored in the identification information table 121. If the received dock identification information is stored in the identification information table 121, the process proceeds to step S13. If the received dock identification information is not stored in the identification information table 121, the process proceeds to step S28 (refer to FIG. 14).

(Step S13) The identification information authenticating unit 140 switches the connection permission signal B1 from an OFF state to an ON state and outputs it to the switch 107 to permit a wired connection with the dock unit 200.

(Step S14) The device control unit 150 searches a device information table for a device configuration corresponding to the received dock identification information. Then, the device control unit 150 enables each device that was present in the dock unit 200 last time the slate unit was coupled to the dock unit 200. Enabling a device is achieved, for example, by loading a device driver corresponding to the device that is to be enabled.

(Step S15) The sensor 109 detects a coupling state with the dock unit 200 and switches the coupling signal A1 from an OFF state to an ON state. Since the connection permission signal B1 is in an ON state in step S 13, the slate unit 100 is connected to the dock unit 200 via a wire. Then, the process proceeds to step S21.

(Step S21) The device control unit 150 detects a configuration of devices connected to the bus 210 of the dock unit 200.

(Step S22) The device control unit 150 determines whether the detected device configuration is identical with the device configuration of the last time which is searched for in step S14. If the device configurations are identical with each other, the process proceeds to step S26. If the device configurations are not identical with each other, the process proceeds to step S23.

(Step S23) The device control unit 150 outputs notification information for notifying a user that the detected device configuration is not identical with the device configuration of the last time the slate unit is coupled to the dock unit 200 via a wire. Notification of information is performed, for example, by displaying information on the display 104. Here, the device control unit 150 prompts a user to select whether or not to approve the different device configuration, on the display 104.

(Step S24) The device control unit 150 receives, from the input device (the touch panel 105), reply information including a selection of whether or not to approve the device configuration that is not identical with the device configuration of the last wired-connection time. Then, the device control unit 150 determines whether or not the received user's selection is approval. If a user approves, the process proceeds to step S25. If a user does not approve, the process proceeds to step S27.

(Step S25) When there is a device that is added since the last wired-connection time, the device control unit 150 loads a device driver corresponding to the added device. Then, the device control unit 150 updates the device configuration corresponding to dock identification information of the dock unit 200 recorded in the device information table 122, to the detected device configuration.

(Step S26) When the device driver corresponding to each device of the dock unit 200 is loaded, and an initial setting process for enabling each device ends, the slate unit 100 becomes operable to control each device of the dock unit 200.

(Step S27) The device control unit 150 switches the connection permission signal B1 from an ON state to an OFF state and outputs it to the switch 107 to prohibit a wired connection with the dock unit 200.

Note that the following process may be executed when a wired connection is permitted or prohibited for each device as illustrated in FIG. 11, or when a wired connection is permitted or prohibited for each type of devices, for example. In step S27, the device control unit 150 may disconnect only the switch connected to the device that is not recorded in the device information table 122 obtained in step S14, among the current devices of the dock unit 200 detected in step S21, in order to prohibit a wired connection with the device. Also, in this case, the device control unit 150 may inquire a user whether or not to permit a wired connection with each device not recorded in the device information table, among the current devices of the dock unit 200, in step S24. Then, the device control unit 150 may receive reply information of whether or not to permit a wired connection with each device and disconnect only the switch connected to the device for which a connection is not permitted.

(Step S28) The identification information authenticating unit 140 outputs notification information for notifying a user of authentication failure, by a method such as displaying the notification information on the display 104.

According to the above second embodiment, the slate unit 100 receives dock identification information that the dock unit 200 transmits using the IC tag 220, and authenticates the dock unit 200 on the basis of the received dock identification information. Then, when succeeding in authentication, the slate unit 100 executes a control to permit a wired connection with the dock unit 200 in order to enable the devices in the dock unit 200. This limits the slate unit 100 connectable to the dock unit 200 via a wire and thus ensures security of the devices in the dock unit 200. For example, information stored in the memory device of the dock unit 200 is prevented from being read and leaked by a non-approved slate unit 100.

Also, since identification information is transmitted and received using the IC tag 220, the slate unit 100 authenticates the received dock identification information, before coupling to the dock unit 200. Thereby, the slate unit 100 can execute a process for enabling devices in the dock unit 200, such as loading a device driver, on the basis of a device configuration recorded in the device information table 122, before coupling to the dock unit 200 for which a wired connection is permitted. Thus, for example, a time until devices in the dock unit 200 are enabled is shortened so as to improve convenience for a user, as compared to a case where an authentication process is executed after the slate unit 100 is coupled to the dock unit 200.

Also, since identification information is transmitted and received using the IC tag 220, the slate unit 100 authenticates the dock unit 200 even when power supply is not supplied to the dock unit 200. This simplifies the configuration of the dock unit 200. Further, since identification information is transmitted and received using the IC tag 220, the signal lines of the connection units 108 and 208 are reduced as compared to a method that provides a signal of identification information in the connection units 108 and 208. This reduces the size of a device such as the connection units 108 and 208 and reduces the cost for manufacturing the slate unit 100 and the dock unit 200.

In the meantime, in the above second embodiment, the slate unit 100 is connectable to an ineligible dock unit via a wire, for example, when the slate unit 100 is brought to an adjacent position of an eligible dock unit for which a wired connection is permitted in order to set the slate unit 100 in a connectable state to a dock unit via a wire, and thereafter the slate unit 100 is coupled to an ineligible dock unit. As described above, unrightful use of the dock unit 200 is not preferable for security of devices in the dock unit 200. Hereafter, such unrightful use is referred to as "masquerading".

Next, two exemplary variants of the second embodiment for preventing masquerading will be described.

First, the first exemplary variant will be described. The first exemplary variant is configured by the slate unit 100 and the dock unit 200 having the same hardware configuration and function as the second embodiment. Note that, in the dock unit 200, the IC tag 220 is connected to the bus 210.

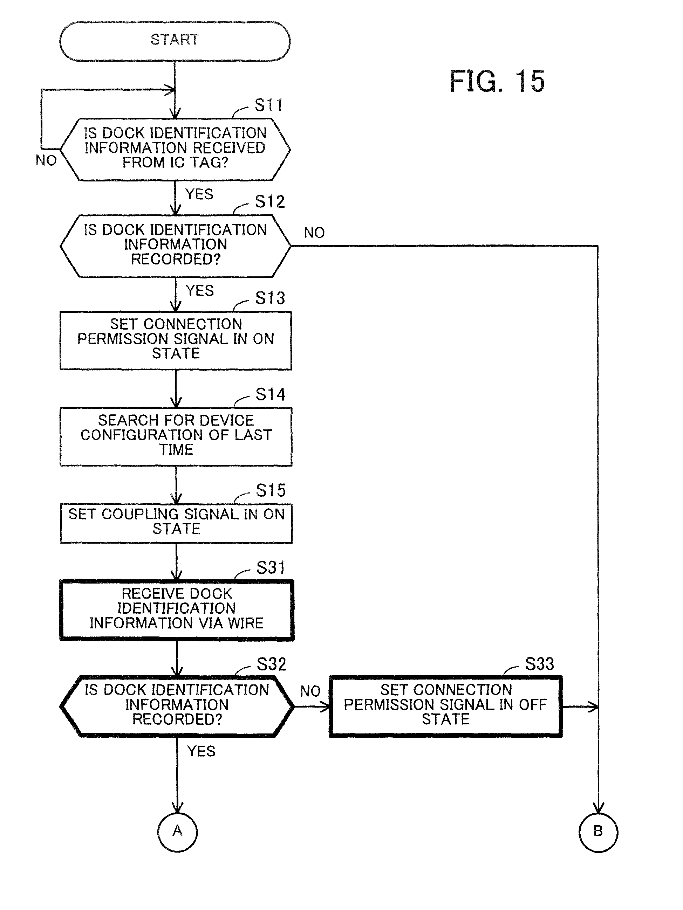

FIG. 15 is a flowchart illustrating an exemplary variant of authentication of the slate unit in the first exemplary variant. In the process of FIG. 15, steps S31 to S33 are added between steps S15 and S21 of FIG. 13. In FIG. 15, processes other than steps S31 to S33 are same as those in FIGS. 13 and 14, and thus their description will be omitted.

(Step S31) The identification information authenticating unit 140 detects a coupling state with the dock unit 200, for example, on the basis of a detection signal (a coupling signal of FIGS. 10 to 12) from the sensor 109, and receives dock identification information from the identification information storing unit 221 of the dock unit 200 via wires of the buses 111 and 210.

(Step S32) The identification information authenticating unit 140 determines whether dock identification information received via the wires is stored in the identification information table 121. If the received dock identification information is stored in the identification information table 121, the process proceeds to step S21 (refer to FIG. 14). If the received dock identification information is not stored in the identification information table 121, the process proceeds to step S33.

(Step S33) The identification information authenticating unit 140 switches the connection permission signal B1 from an ON state to an OFF state and outputs it to the switch 107 to prohibit a wired connection with the dock unit 200. Then, the process proceeds to step S28 (refer to FIG. 14).

As described above, in the first exemplary variant, the slate unit 100 authenticates the dock unit 200 with dock identification information received from the IC tag 220, and thereafter receives identification information of the dock unit 200 via a wired bus when coupled to the dock unit 200. Then, the slate unit 100 authenticates the received dock identification information. When authentication fails, a wired connection is prohibited. Thereby, when the slate unit is coupled via a wire to an ineligible dock unit which is not the dock unit that has succeeded in wireless authentication, the slate unit prohibits a wired connection with a coupled dock unit on the basis of authentication using dock identification information obtained via a wire. As described above, the first exemplary variant prevents masquerading.

Although, in the above first exemplary variant, the slate unit 100 executes an authentication process after coupled to the dock unit 200 by wired communication, this authentication process may be executed by wireless communication in some other methods. For example, the identification information receiving unit 130 of the slate unit 100 is operable to adjust the strength of radio wave emitted from the IC tag reader 110 in order to set the coverage distance of wireless communication to one of two distances: a first distance and a second distance that is shorter than the first distance.

In step S11 of FIG. 15, the identification information receiving unit 130 sets the coverage distance of wireless communication to the first distance and, when the IC tag 220 of the dock unit 200 is adjacent at a distance equal to or smaller than the first distance, receives identification information from the IC tag 220. On the other hand, in step S31 of FIG. 15, the identification information receiving unit 130 sets the coverage distance of wireless communication to the second distance that is shorter than the first distance and, when the IC tag 220 of the dock unit 200 is adjacent at a distance equal to or smaller than the second distance, receives identification information from the IC tag 220 again. Here, it is preferable that the second distance be set close to the distance between the IC tag reader 110 of the slate unit 100 and the IC tag 220 of the dock unit 200 in a coupling state.

As described above, probability of masquerading is reduced, even when an authentication process after coupling to the dock unit 200 is replaced by wireless communication.

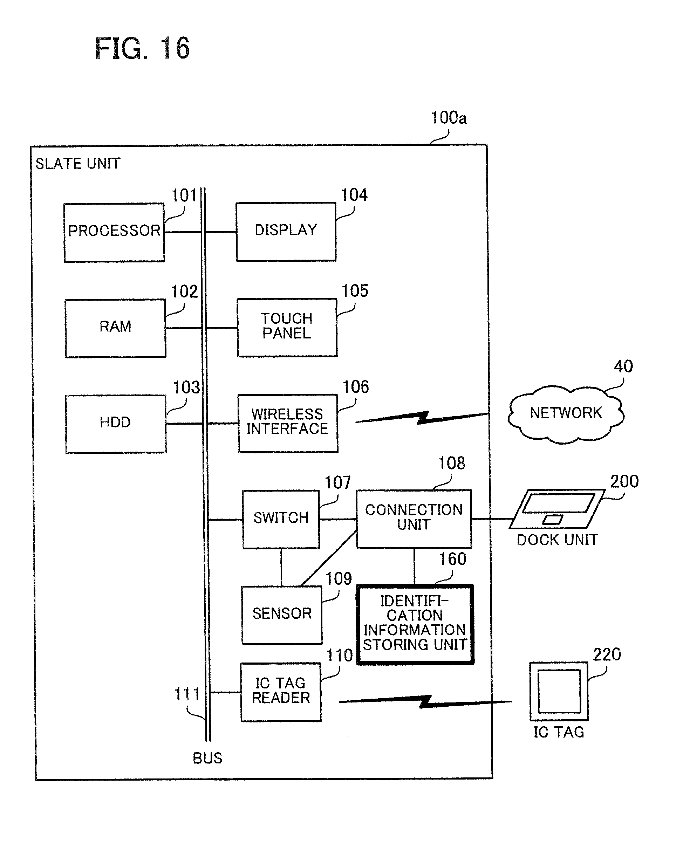

Next, a second exemplary variant will be described. FIG. 16 is a block diagram of the second exemplary variant of hardware of the slate unit. In FIG. 16, same reference signs are assigned to same devices as those in FIG. 3.

In the slate unit 100a illustrated in FIG. 16, an identification information storing unit 160 is added to the slate unit 100 illustrated in FIG. 3. In FIG. 16, devices other than the identification information storing unit 160 are same as those in FIG. 3, and thus their description will be omitted.

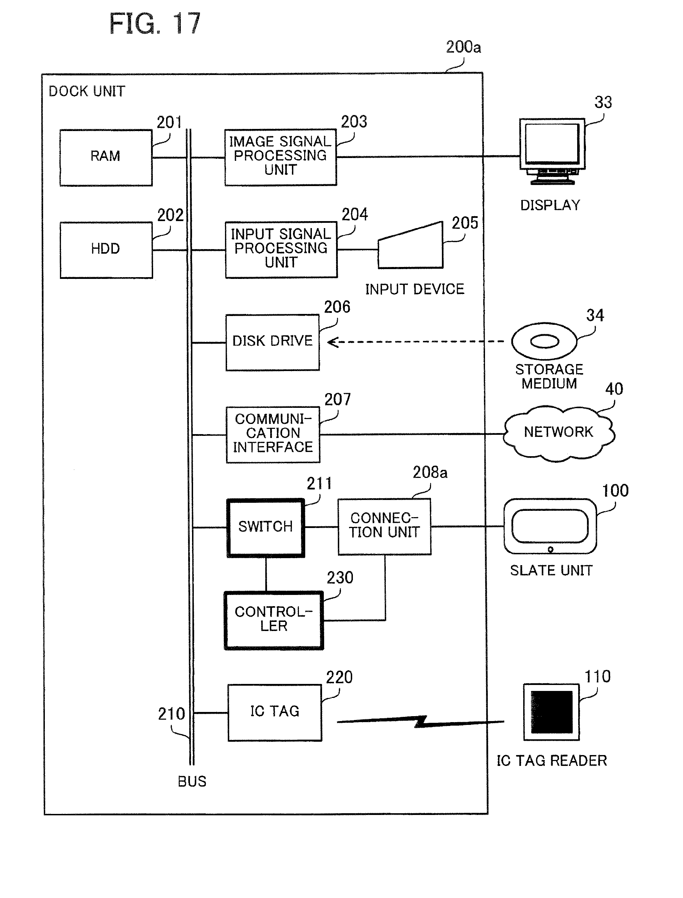

The identification information storing unit 160 is connected to the connection unit 108. Data stored in the identification information storing unit 160 is referred to via the connection unit 108 by a controller in a dock unit, when the slate unit 100 is coupled to the dock unit described in FIG. 17. The identification information storing unit 160 may be a flash memory or a ROM.

FIG. 17 is a block diagram of a second exemplary variant of hardware of the dock unit. In FIG. 17, same reference signs are assigned to same devices as those in FIG. 4.

In the dock unit 200a illustrated in FIG. 17, the switch 211 and the controller 230 are added to the dock unit 200 illustrated in FIG. 4. Also, the dock unit 200a includes a connection unit 208a, instead of the connection unit 208 illustrated in FIG. 4. In FIG. 17, devices other than the connection unit 208a, the switch 211, and the controller 230 are same as those in FIG. 4, and thus their description will be omitted. The connection unit 208a and the bus 210 are connected to each other via the switch 211. Also, the controller 230 is connected to the connection unit 208a and the switch 211.

The controller 230 is an electronic device including a memory device, a computing device, and other devices. The controller 230 includes a sensor (not depicted in the drawings) that detects a coupling state of the dock unit 200a to the slate unit 100a. Like the sensor 109 of the slate unit 100a, this sensor has a function for mechanically or optically detecting a connection between connectors, for example.

The controller 230 detects a coupling state of the dock unit 200a to the slate unit 100a and outputs the signal indicating the coupling state to the switch 211. Also, when the dock unit 200a is coupled to the slate unit 100a, the controller 230 refers to information stored in the identification information storing unit 160 via the connection unit 208a. The memory device in the controller 230 is a non-volatile memory device, such as a flash memory and an SSD. Also, the computing device in the controller 230 may be a processor, such as a CPU, or a dedicated circuit, such as an FPGA and an ASIC.

The switch 211 is a component that connects and disconnects the bus 210 and the connection unit 208a. The switch 211 connects and disconnects the bus 210 and the connection unit 208a in accordance with an instruction from the controller 230. Specifically, when receiving a signal indicating the slate unit 100a and the dock unit 200a are coupled to each other and a signal that permits use of each device in the dock unit 200a from the controller 230, the switch 211 switches to a state that allows data to be transmitted to, and received from, the slate unit 100a via the connection unit 208a. Also, when a signal that permits use of each device in the dock unit 200a is not input from the controller 230 (i.e., when use of each device in the dock unit 200a is prohibited), the switch 211 switches to a state that does not allow data to be transmitted to, and received from, the slate unit 100a via the connection unit 208a.

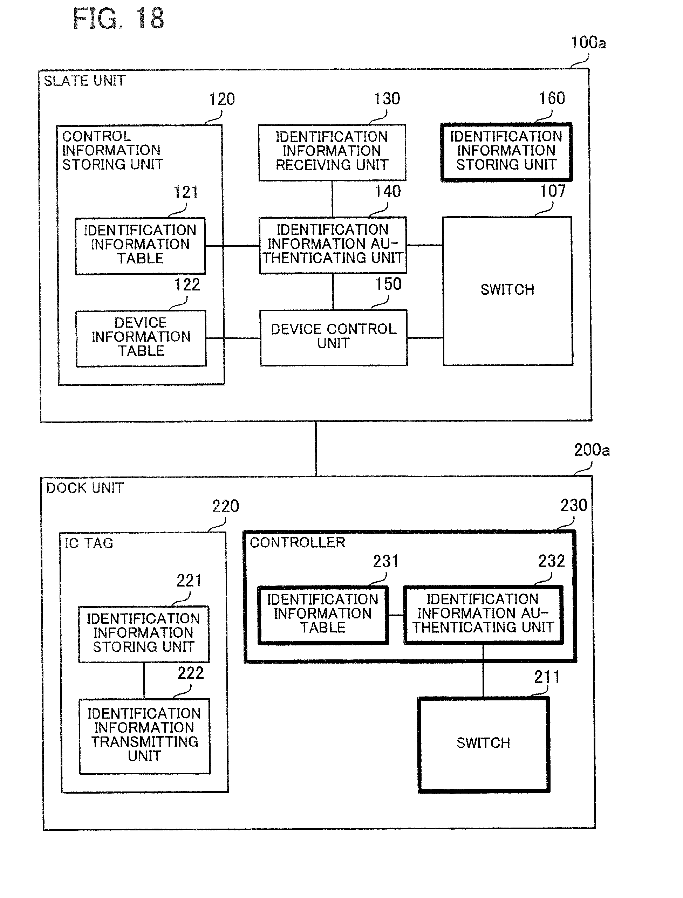

FIG. 18 is a block diagram of an exemplary variant of functional configurations of the slate unit and the dock unit in the second exemplary variant. In FIG. 18, functions other than the identification information storing unit 160, the switch 211, the controller 230, an identification information table 231, and an identification information authenticating unit 232 are same as those in FIG. 5, and thus their description will be omitted.

The identification information storing unit 160 is added to the slate unit 100a. The identification information storing unit 160 stores slate identification information indicating the slate unit 100a.

The switch 211 and the controller 230 (refer to FIG. 17) are added to the dock unit 200a. The controller 230 includes the identification information table 231 and the identification information authenticating unit 232. The identification information table 231 is configured by a non-volatile memory device of the controller 230, and the identification information authenticating unit 232 is configured by a computing device of the controller 230.

The identification information table 231 stores slate identification information indicating a slate unit that is permitted to be connected via a wire. Note that slate identification information of a same slate unit may be stored in identification information tables of a plurality of dock units. Also, slate identification information of a plurality of slate units may be stored in the identification information table 231 of one dock unit.

When the dock unit 200a is coupled to the slate unit 100a, the identification information authenticating unit 232 refers to slate identification information stored in the identification information storing unit 160, and determines whether the referred slate identification information is stored in the identification information table 231 in order to authenticate the slate unit 100a. When the referred slate identification information is stored in the identification information table 231, authentication successes, and the identification information authenticating unit 232 controls the switch 211 to permit a wired connection with the slate unit 100a. Note that it is preferable that the process of the identification information authenticating unit 232 be unchangeable from outside.

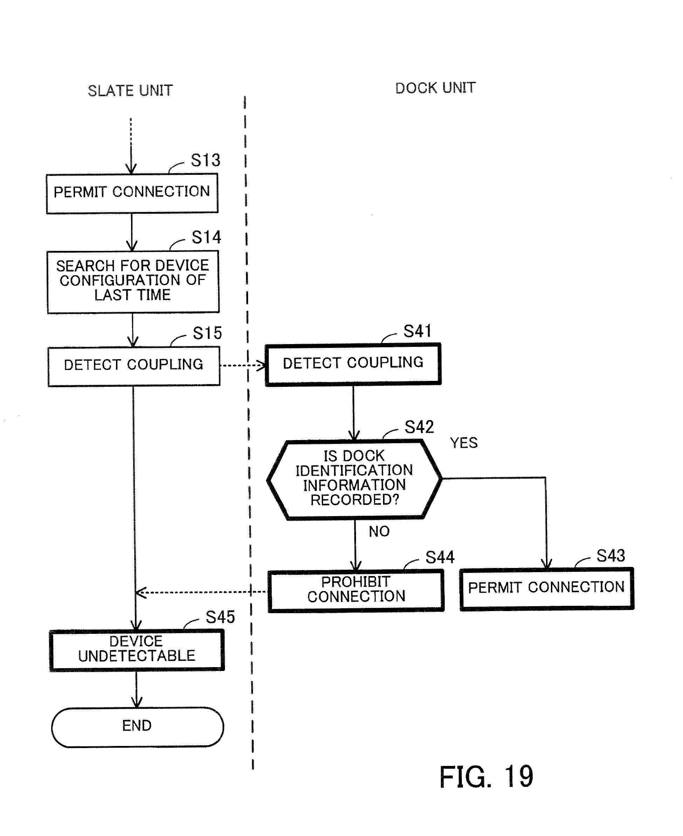

FIG. 19 is a sequence illustrating an exemplary variant of an authentication process in the second exemplary variant. In FIG. 19, same reference signs are assigned to same processes as those in FIGS. 13 and 14.

When succeeding in authentication for the adjacent dock unit 200a in accordance with the procedure illustrated in steps S11 and S 12 of FIG. 13, the slate unit 100a sets the switch 107 in a connecting state to permit a wired connection with the dock unit 200a (step S13). Then, the slate unit 100a searches the device information table 122 for a device configuration of the last time and starts loading a device driver corresponding to the device of the dock unit 200a coupled last time (step S14).

Thereafter, the slate unit 100a detects a coupling state with the dock unit 200a (step S 15). Here, the coupled dock unit 200a executes processes of steps S41 to S44. Note that the dock unit 200a that executes processes of steps S41 to S44 can be different from the dock unit 200a that the slate unit 100a has successfully authenticated in step S12.

(Step S41) The identification information authenticating unit 232 detects a coupling state with the slate unit 100a.

(Step S42) The identification information authenticating unit 232 reads slate identification information of the identification information storing unit 160 via the connection units 108 and 208a. The identification information authenticating unit 232 determines whether the read slate identification information is stored in the identification information table 231. If the read slate identification information is stored, the process proceeds to step S43. If the read slate identification information is not stored, the process proceeds to step S44.

(Step S43) The identification information authenticating unit 232 sets the switch 211 in a connecting state to permit a wired connection with the slate unit 100.

(Step S44) The identification information authenticating unit 232 sets the switch 211 in a disconnecting state to prohibit a wired connection with the slate unit 100.

On the other hand, after the execution of step S15, the slate unit 100a tries to detect devices in the coupled dock unit 200a via the bus 111, as in step S21 of FIG. 14. When the process of step S43 is executed to set the switch 211 of the dock unit 200a in a connecting state, the slate unit 100a executes the processes of and after step S22 of FIG. 14. Note that processes of this case are not illustrated in FIG. 19.

On the other hand, when the process of step S44 is executed to set the switch 211 of the dock unit 200a in a disconnecting state, the slate unit 100a executes the process of next step S45.

(Step S45) Since the switch 211 of the dock unit 200a is in a disconnecting state, the device control unit 150 is unable to detect the devices of the coupled dock unit 200a. For example, if the device control unit 150 is unable to detect the devices of the dock unit 200a within a predetermined time, the device control unit 150 displays notification information on the display 104 to notify a user that the devices of the dock unit 200a are unable to be detected, and then ends the process.

As described above, in the second exemplary variant, when the slate unit 100a is coupled after the dock unit 200a is authenticated by the slate unit 100a, the dock unit 200a authenticates the slate unit 100a on the basis of identification information of the slate unit 100a that is able to be referred to via the wired connection unit 208a. When succeeding in authentication, the dock unit 200a permits a wired connection of the slate unit 100a. Thus, when another dock unit that is different from the dock unit that wirelessly succeeds in authentication is connected to the slate unit via a wire, the dock unit 200a prohibits a wired connection with the coupled slate unit 100a on the basis of authentication using slate identification information obtained via a wire. Thereby, the second exemplary variant in the information processing apparatus of the second embodiment prevents masquerading.

Note that, as described above, the information processing of the first embodiment is performed by causing the information processing apparatus 10 to execute a program, and the information processing of the second embodiment is performed by causing the processor 101 of the slate unit 100 to execute a program. Such a program may be stored in a computer-readable storage medium (for example, the storage medium 34). Such a storage medium is, for example, a magnetic disk, an optical disc, a magneto-optical disk, or a semiconductor memory. The magnetic disk includes an FD and an HDD. The optical disc includes a CD, a CD-R(Recordable)/RW(Rewritable), a DVD, and a DVD-R/RW.

When putting a program on market, a portable storage medium having the program stored therein is provided, for example. Also, a program may be stored in a memory device of another computer, so that the program is distributed via the network 40. For example, a computer stores a program, which is stored in a portable storage medium or received from another computer, in a memory device (for example, the HDD 103) and reads the program from the memory device in order to execute it. Note that a program read from a portable storage medium (for example, the storage medium 34) may be directly executed, and a program received via the network 40 from another computer may be directly executed. Also, at least a part of the above information processing may be executed by an electronic circuit, such as a DSP, an ASIC, and a PLD (Programmable Logic Device).

The above merely illustrates a principle of the embodiments. Also, a person skilled in the art will make various modifications and alterations, and the embodiments are not exactly limited to the configurations and exemplary applications illustrated and described above, but encompasses all corresponding exemplary variants and equivalents thereof in the scope of the appended claims and equivalents thereof.

### Reference Signs List

10 information processing apparatus
11 memory unit
12 receiver unit
13 control unit
14, 23 wired transmission channel
20 function extension unit
21 memory unit
22 wireless transmitter unit

## Claims

1. An information processing apparatus that is couplable to a function extension unit to transmit data to, and receive data from, the coupled function extension unit via a wired transmission channel, comprising:
a memory unit configured to store unit identification information indicating the function extension unit that is permitted to transmit and receive data;
a receiver unit configured to, when adjacent to the function extension unit, receive the unit identification information indicating the function extension unit from the adjacent function extension unit by wireless communication; and
a control unit configured to permit data transmission and reception with the adjacent function extension unit via the wired transmission channel, when the received unit identification information is identical with the unit identification information stored in the memory unit.

2. The information processing apparatus according to claim 1, wherein
the memory unit further stores device identification information indicating one processing device or a plurality of processing devices in the function extension unit that is permitted to transmit
and receive data, and
the control unit starts a process for enabling control of the processing device or processing devices indicated by the device identification information stored in the memory unit, when the received unit identification information is identical with the unit identification information stored in the memory unit.

3. The information processing apparatus according to claim 2, wherein
the control unit detects the processing device or processing devices in the function extension unit and updates the device identification information stored in the memory unit with device identification information indicating the detected processing device or processing devices, when the adjacent function extension unit is coupled to the information processing apparatus.

4. The information processing apparatus according to claim 3, wherein
when the adjacent function extension unit is coupled to the information processing apparatus, the control unit determines whether the processing device or processing devices in the function extension unit are identical with the processing device or processing devices indicated by the device identification information stored in the memory unit and, when not identical, outputs notification information for notifying that a configuration of the function extension unit has been changed.

5. The information processing apparatus according to claim 3, wherein
when the adjacent function extension unit is coupled to the information processing apparatus, the control unit compares the processing device or processing devices in the function extension unit with the processing device or processing devices indicated by the device identification information stored in the memory unit and, when determining that the function extension unit is equipped with a new processing device or new processing devices on the basis of a comparison result, prohibits data transmission and reception with the function extension unit via the wired transmission channel.

6. The information processing apparatus according to claim 3, wherein
when the adjacent function extension unit is coupled to the information processing apparatus, the control unit compares the processing device or processing devices in the function extension unit with the processing device or processing devices indicated by the device identification information stored in the memory unit and, when determining that the function extension unit is equipped with a new processing device or new processing devices on the basis of a comparison result, prohibits data transmission and reception only with the new processing device or processing devices, among the processing devices in the function extension unit, via the wired transmission channel.

7. The information processing apparatus according to any one of claims 1 to 6, wherein when coupled to the function extension unit after permitting data transmission and reception via the wired transmission channel, the control unit receives the unit identification information from the coupled function extension unit via the wired transmission channel and, when the unit identification information received via the wired transmission channel is not identical with the unit identification information stored in the memory unit, prohibits data transmission and reception with the coupled function extension unit via the wired transmission channel.

8. The information processing apparatus according to any one of claims 1 to 7, wherein
the memory unit stores the unit identification information indicating a plurality of function extension units, and
the control unit permits data transmission and reception with the adjacent function extension unit via the wired transmission channel, when the function extension unit indicated by the received unit identification information is identical with one of the function extension units indicated by the unit identification information stored in the memory unit.

9. The information processing apparatus according to any one of claims 1 to 8, wherein
the receiver unit is a wireless IC tag reader.

10. A function extension unit that is couplable to an information processing apparatus to transmit data to, and receive data from, the coupled information processing apparatus via a wired transmission channel, comprising:
a memory unit configured to store unit identification information indicating the function extension unit; and
a wireless transmitter unit configured to transmit the unit identification information stored in the memory unit to the information processing apparatus by wireless communication, when adjacent to the information processing apparatus.

11. The function extension unit according to claim 10, further comprising
a device identification information storing unit configured to store device identification information indicating the information processing apparatus that is permitted to transmit and receive data, and
a connection control unit configured to, when coupled to the information processing apparatus, receive the device identification information indicating the information processing apparatus from the coupled information processing apparatus, and prohibit data transmission and reception with the coupled information processing apparatus via the wired transmission channel when the received device identification information is not identical with the device identification information stored in the device identification information storing unit.

12. The function extension unit according to claim 10 or 11, wherein
the memory unit and the wireless transmitter unit is configured by a wireless IC tag.

13. An information processing system comprising an information processing apparatus and a function extension unit, the information processing apparatus being couplable to the function extension unit to transmit data to, and receive data from, the coupled function extension unit via a wired transmission channel, wherein:
the information processing apparatus includes
a first memory unit configured to store unit identification information indicating the function extension unit that is permitted to transmit and receive data,
a receiver unit configured to, when adjacent to the function extension unit, receive the unit identification information indicating the function extension unit from the adjacent function extension unit by wireless communication, and
a control unit configured to permit data transmission and reception with the adjacent function extension unit via the wired transmission channel, when the received unit identification information is identical with the unit identification information stored in the first memory unit; and
the function extension unit in the information processing system includes
a second memory unit configured to store the unit identification information indicating the function extension unit, and
a wireless transmitter unit configured to transmit the unit identification information stored in the second memory unit by wireless communication in response to a request from the information processing apparatus.

14. The information processing system according to claim 13, wherein
the first memory unit further stores device identification information indicating one processing device or a plurality of processing devices in the function extension unit that is permitted to transmit and receive data,
the control unit starts a process for enabling control of the processing device or processing devices indicated by the device identification information stored in the first memory unit, when the received unit identification information is identical with the unit identification information stored in the first memory unit.

15. The information processing system according to claim 14, wherein
the control unit detects the processing device or processing devices in the function extension unit and updates the device identification information stored in the first memory unit with the device identification information indicating the detected processing device or processing devices, when the adjacent function extension unit is coupled to the information processing apparatus.

16. The information processing system according to claim 15, wherein
when the adjacent function extension unit is coupled to the information processing apparatus, the control unit compares the processing device or processing devices in the function extension unit with the processing device or processing devices indicated by the device identification information stored in the first memory unit and, when determining that the function extension unit is equipped with a new processing device or new processing devices on the basis of a comparison result, notifies the information processing apparatus.

17. The information processing system according to claim 15, wherein
when the adjacent function extension unit is coupled to the information processing apparatus, the control unit compares the processing device or processing devices in the function extension unit with the processing device or processing devices indicated by the device identification information stored in the first memory unit and, when determining that the function extension unit is equipped with a new processing device or new processing devices on the basis of a comparison result, prohibits data transmission and reception with the function extension unit via the wired transmission channel.

18. The information processing system according to claim 15, wherein
when the adjacent function extension unit is coupled to the information processing apparatus, the control unit compares the processing device or processing devices in the function extension unit with the processing device or processing devices indicated by the device identification information stored in the first memory unit and, when determining that the function extension unit is equipped with a new processing device or new processing devices on the basis of a comparison result, prohibits data transmission and reception only with the new processing device or processing devices, among the processing devices in the function extension unit, via the wired transmission channel.

19. The information processing system according to any one of claims 13 to 18, wherein when coupled to the function extension unit after permitting data transmission and reception via the wired transmission channel, the control unit receives the unit identification information from the coupled function extension unit via the wired transmission channel and, when the unit identification information received via the wired transmission channel is not identical with the unit identification information stored in the first memory unit, prohibits data transmission and reception with the coupled function extension unit via the wired transmission channel.

20. The information processing system according to any one of claims 13 to 18, wherein
the information processing apparatus further includes a third memory unit configured to store device identification information indicating the information processing apparatus, and
the function extension unit in the information processing system further includes
a fourth memory unit configured to store the device identification information indicating the information processing apparatus that is permitted to transmit and receive data, and
a connection control unit configured to, when coupled to the information processing apparatus, read the device identification information from the third memory unit of the coupled information processing apparatus, and prohibit data transmission and reception with the coupled information processing apparatus via the wired transmission channel when the device identification information read from the third memory unit is not identical with the device identification information stored in the fourth memory unit.
